# EUROPÄISCHE PATENTSCHRIFT

(11) **EP 1 766 470 B1**
(45) Veröffentlichungstag und Bekanntmachung des Hinweises auf die Patenterteilung: **01.12.2010**
(21) Anmeldenummer: 05766870.9
(22) Anmeldetag: 05.07.2005
(51) Int. Cl.: G03B 1/30, G03B 1/32, G03B 41/02

(54) **Verfahren und Vorrichtung zum Transport eines Laufbildfilmes**
Method and device for transporting a motion picture film
Procédé et dispositif pour le transport d'un film cinématographique

(30) Priorität: 06.07.2004 DE 102004033590
(43) Veröffentlichungstag der Anmeldung: 28.03.2007
(73) Patentinhaber: Arnold & Richter Cine Technik GmbH & Co. Betriebs KG, 80799 München (DE)
(72) Erfinder: HANDLER, Josef, A-1160 Wien (AT)
(74) Vertreter: Ninnemann, Detlef
(86) Internationale Anmeldenummer: PCT/DE2005/001205
(87) Internationale Veröffentlichungsnummer: WO 2006/005318

(56) Entgegenhaltungen:
- WO-A-03/067322
- DE-A1- 3 144 333
- DE-A1- 19 831 211
- GB-A- 1 371 773

## Beschreibung

Die Erfindung bezieht sich auf ein Verfahren und eine Vorrichtung zum Transport eines Laufbildfilmes entlang eines Filmtransportweges.

Aus der DE 198 31 211 A1 ist eine Vorrichtung zum intermittierenden Transport eines Laufbildfilmes bekannt, der parallel zur Filmtransportrichtung mindestens eine Perforationslochreihe aufweist, in die eine rollierend verzahnte, intermittierend bewegte Zahntrommel zum Filmtransport und Grobpositionieren des Laufbildfilmes vor einem Bildfenster eingreift. Zum Feinpositionieren und Fixieren des Laufbildfilmes vor dem Bildfenster ist zusätzlich ein in mindestens ein Perforationsloch eintauchendes Positionierungselement vorgesehen, das einen exakten Bildstand des Laufbildfilmes vor dem Bildfenster sichert.

Eine derartige Vorrichtung findet zur Wiedergabe bzw. zur Bearbeitung von Laufbildfilmen in Filmprojektoren, Filmscannern und dergleichen Anwendung.

Zum Transport von Archivfilmen, beispielsweise von historischem, ggf. über 100 Jahre altem Filmmaterial, eignet sich eine gegebenenfalls vorhandene Perforationslochreihe nicht oder nur sehr eingeschränkt zum Filmtransport mittels einer Filmzahnrolle bzw. Zahntrommel, da aufgrund von Schrumpfungsprozessen, fehlenden oder beschädigten Perforationslöchern bzw. nicht mehr gängigen Perforationslochformen ein ordnungsgemäßer Filmtransport nicht gewährleistet oder nur mit erheblichen Qualitätseinbußen bei der Wiedergabe bzw. beim Scannen des Laufbildfilmes möglich ist. Ein weiterer Grund für einen Verzicht auf eine Verwendung der üblichen Filmtransportvorrichtungen ist in der Notwendigkeit einer schonenden Behandlung des häufig unwiederbringlichen Filmmaterials zu sehen.

Aus der WO 03/067322 A ist ein Verfahren zum Transport eines Films entlang eines gebogenen Filmtransportweges im Bereich eines Bildfensters mit Führungs- und Filmtransportmitteln bekannt, die aus zwei koaxialen Rollen, auf denen der Film mit seinen Seitenrändern aufliegt, und zwei parallelen Filmtransportriemen, die auf der den Rollen gegenüber liegenden Seite reibschlüssig an den Seitenrändern des Films anliegen, bestehen. Mittels der Führungs- und Filmtransportmittel wird der Laufbildfilm kontinuierlich oder intermittierend an dem Bildfenster vorbeibewegt.

Der vorliegenden Erfindung liegt die Aufgabenstellung zugrunde, ein Verfahren und eine Vorrichtung zum Transport eines Laufbildfilmes entlang eines Filmtransportweges anzugeben, die einen das Filmmaterial des Laufbildfilmes schonenden Filmtransport gewährleistet, eine exakte Einhaltung der Filmtransportschritte und Positionierung der Filmbilder vor einem Bildfenster sicherstellt, ohne dass das Abwickeln und Aufwickeln des Laufbildfilmes von einem Abwickelteller bzw. auf einen Aufwickelteller Einfluss auf den Bildstand am Bildfenster hat, sowie unterschiedliche Filmtransportgeschwindigkeiten und eine einfache Handhabung ermöglicht.

Diese Aufgabe wird erfindungsgemäß durch ein Verfahren mit den Merkmalen des Anspruchs 1 sowie eine Vorrichtung mit den Merkmalen des Anspruchs 8 gelöst.

Die erfindungsgemäße Lösung gewährleistet einen das Filmmaterial eines Laufbildfilmes schonenden Filmtransport, eine exakte Einhaltung der Filmtransportschritte und Positionierung der Filmbilder vor einem Bildfenster, ohne dass das Abwickeln und Aufwickeln des Laufbildfilmes von einem Abwickelteller bzw. auf einen Aufwickelteller Einfluss auf den Bildstand am Bildfenster hat und ermöglicht unterschiedliche Filmtransportgeschwindigkeiten und eine einfache Handhabung.

Der Erfindung liegt die Erkenntnis zugrunde, dass ein Filmtransport mittels Reibschlusses zwischen einem geeigneten Filmtransportmittel und fortlaufenden Abschnitten des Laufbildfilmes eine schonende Behandlung des Filmmaterials ermöglicht und durch Vermeidung jedweden Schlupfes zwischen dem intermittierend oder schrittweise bewegten Filmtransportmittel und dem zu transportierenden Laufbildfilm eine exakte Einhaltung der Filmtransportschritte und Positionierung des Laufbildfilmes vor einem Bildfenster gewährleistet sind. Da der Reibschluss zwischen dem Filmtransportmittel und dem Laufbildfilm an unterschiedlichen Bereichen des Laufbildfilmes erfolgen kann, ist gleichzeitig gewährleistet, dass Kontakte mit den Filmbildern vermieden werden, so dass insbesondere bei der Wiedergabe oder beim Scannen von Archivfilmen die Gefahr einer Beschädigung der Filmbildfläche des Laufbildfilmes minimal ist.

Durch die Anordnung von jeweils ein Filmtransportmittel und eine Anpresseinrichtung enthaltenden, den Laufbildfilm transportierenden Vor- und Nachwickeleinrichtungen zu beiden Seiten eines Bildfensters wird gewährleistet, dass der Laufbildfilm in definierter Weise am Bildfenster vorbeibewegt wird, ohne dass das Abwickeln und Aufwickeln des Laufbildfilmes von einem Abwickelteller bzw. auf einen Aufwickelteller Einfluss auf den Bildstand am Bildfenster hat.

Zur Erleichterung der Handhabung beim Einlegen des Laufbildfilmes in die Filmtransportvorrichtung kann die Anpresseinrichtung relativ zum Filmtransportmittel zwischen einer Filmeinlegeposition und einer Filmtransportposition bewegt werden.

Vorzugsweise erfolgt der Filmtransport durch eine fortlaufende reibschlüssige Anlage des Filmtransportmittels an mindestens einer Seite des Laufbildfilmes, so dass kein intermittierender Kontakt zwischen dem Filmtransportmittel und dem Laufbildfilm auftritt, was einerseits das Filmmaterial schont und andererseits das Auftreten unkontrollierter Bewegungen des Laufbildfilmes verhindert.

Ein weiteres Merkmal zur schonenden Behandlung des Filmmaterials beim Filmtransport besteht in einer fortlaufenden, reibschlüssigen Anlage des Filmtransportmittels an der Schicht- und/oder Trägerseite des Laufbildfilmes.

Eine Beschädigung der Filmbilder beim Filmtransport kann dadurch ausgeschlossen werden, dass das Filmtransportmittel im Bereich der Seitenränder, insbesondere im Bereich der Filmperforation(en) des Laufbildfilmes, reibschlüssig anliegt.

Eine vorteilhafte Ausgestaltung der erfindungsgemäßen Lösung ist **dadurch gekennzeichnet, dass** der Laufbildfilm von einem Abwickelteller über mehrere erste Umlenkrollen und eine erste, den intermittierenden Filmtransport der Vorwickeleinrichtung ausgleichenden Ausgleichsrolle zur Vorwickeleinrichtung, am Bildfenster vorbei zur Nachwickeleinrichtung sowie über mehrere zweite Umlenkrollen und eine den intermittierenden Filmtransport der Nachwickeleinrichtung ausgleichende zweite Ausgleichsrolle zu einem Aufwickelteller geführt wird.

Durch die Anordnung mehrerer Umlenkrollen und jeweils einer Ausgleichsrolle zwischen dem Abwickelteller und der Vorwickeleinrichtung bzw. der Nachwickeleinrichtung und dem Aufwickelteller wird eine exakte Filmführung sowie die Einhaltung einer konstanten Zugspannung auf den Laufbildfilm gewährleistet, wodurch Reißeffekte, die zur Beschädigung des Laufbildfilmes führen könnten, sowie Geräuschbildungen vermieden werden.

Eine die Aufgabenstellung lösende Vorrichtung zum Transport eines Laufbildfilmes entlang eines Filmtransportweges mit mindestens einem im Filmtransportweg angeordneten, mit einer Antriebseinrichtung verbundenen Filmtransportmittel, das reibschlüssig an einem Abschnitt des Laufbildfilmes anliegt und diesen kontinuierlich oder intermittierend an einem Bildfenster vorbeibewegt, und einer den Laufbildfilm gegen das Filmtransportmittel andrückenden Anpresseinrichtung, zwischen der und dem Filmtransportmittel der Laufbildfilm geführt ist, ist **dadurch gekennzeichnet, dass** das Filmtransportmittel und die Spannrolle zu einer Vorwickeleinrichtung und einer Nachwickeleinrichtung zusammengefasst sind, die zu beiden Seiten des Bildfensters angeordnet sind.

Eine vorteilhafte Ausgestaltung der erfindungsgemäßen Filmtransportvorrichtung ist **dadurch gekennzeichnet, dass** das Filmtransportmittel kontinuierlich und reibschlüssig an Abschnitten des Laufbildfilmes anliegt, wobei das Filmtransportmittel vorzugsweise mit einer Anpressrolle zusammenwirkt, zwischen der und dem Filmtransportmittel der Laufbildfilm kreisbogenförmig geführt ist und mit seiner Schicht- oder Trägerseite reibschlüssig am Filmtransportmittel anliegt.

Vorzugsweise enthält das Filmtransportmittel ein bandförmig ausgebildetes, insbesondere flexibles Zugmittel in Form beispielsweise eines Endlosriemens, eines Endlos-Zahnriemens, Endlos-Flachriemens oder eines Transportbandes, insbesondere eines profilierten Transportbandes.

Um Unebenheiten an der mit dem Laufbildfilm in Kontakt tretenden Oberfläche des Filmtransportmittels und dadurch bedingte Beschädigungen des Laufbildfilmes auszuschließen, kann die reibschlüssig am Laufbildfilm anliegende Seite des Endlosriemens oder Transportbandes zusätzlich geschliffen bzw. beschichtet und geschliffen werden.

Zur besonders schonenden Behandlung des Laufbildfilmes kann die Anpressrolle mit einer glatten, vorzugsweise einer gummierten, am Laufbildfilm anliegende Zylinderfläche versehen werden.

Zur Erleichterung der Handhabung der Filmtransportvorrichtung beim Einlegen des Laufbildfilmes in die Filmtransportvorrichtung bzw. zum Entnehmen des Laufbildfilmes aus der Filmtransportvorrichtung ist die Anpressrolle senkrecht zum Filmtransportweg von einer den Laufbildfilm in reibschlüssige Anlage an das Filmtransportmittel bringenden Filmtransportposition in eine zum Filmtransportmittel beabstandete Einlegeposition beweglich.

In einer bevorzugten Ausführungsform ist der Endlosriemen oder das Transportband um zwei zueinander beabstandete Antriebsrollen und eine zwischen den Antriebsrollen angeordnete, vorzugsweise angefederte Spannrolle gelegt. Durch diese Maßnahme wird eine definierte Spannung des Endlosriemens bzw. des Transportbandes gewährleistet.

Der Antrieb des Filmtransportmittels kann dadurch bewirkt werden, dass mindestens eine Antriebsrolle und/oder die Spannrolle mit einer Antriebseinrichtung direkt oder über ein Riemenvorgelege verbunden ist bzw. sind.

Zur intermittierenden Bewegung des Laufbildfilmes am Bildfenster vorbei und zum kontinuierlichen Abwickeln des Laufbildfilmes von einem Abwickelteller sowie zum kontinuierlichen Aufwickeln des Laufbildfilmes auf einen Aufwickelteller werden im Filmtransportweg des Laufbildfilmes zwischen der Vorwickel- und der Nachwickeleinrichtung und den Laufbildfilm aufnehmenden Aufwickel- und Abwickeltellern mindestens eine Umlenkrolle und eine die Filmtransportbewegung der Vor- und Nachwickeleinrichtung ausgleichende, vorzugsweise angefederte Ausgleichsrolle angeordnet, wobei die Ausgleichsrolle den intermittierenden Filmtransport durch die Vor- und Nachwickeleinrichtung gegenüber dem kontinuierlichen Abwickeln und Abwickeln des Laufbildfilmes von und auf die Wickelteller ausgleicht und einen im wesentlichen konstanten Filmzug gewährleistet.

Die erfindungsgemäße Filmtransportvorrichtung eignet sich insbesondere zur Verwendung in einem Filmprojektor oder einem Filmscanner.

Anhand eines in der Zeichnung dargestellten Ausführungsbeispiels sollen der der Erfindung zugrundeliegende Gedanke und weitere Ausgestaltungsmerkmale der Erfindung näher erläutert werden. Dabei zeigen:
- Fig. 1 -: eine schematische Draufsicht auf einen Teil eines Laufbildfilmes und eines reibschlüssig mit dem Laufbildfilm verbundenen Filmtransportmittels mit einem Zahnriemen;
- Fig. 2 -: eine schematische Draufsicht auf eine Filmtransportvorrichtung für einen Film- scanner mit einer reibschlüssig am Laufbildfilm anliegenden, intermittierend oder kontinuierlich bewegten Vor- und Nachwickeleinrichtung und
- Fig. 3 -: eine schematische Draufsicht auf die Vor- und Nachwickeleinrichtung und das Bildfenster der Filmtransportvorrichtung gemäß Fig. 2 in einer Filmeinlegeposi- tion.

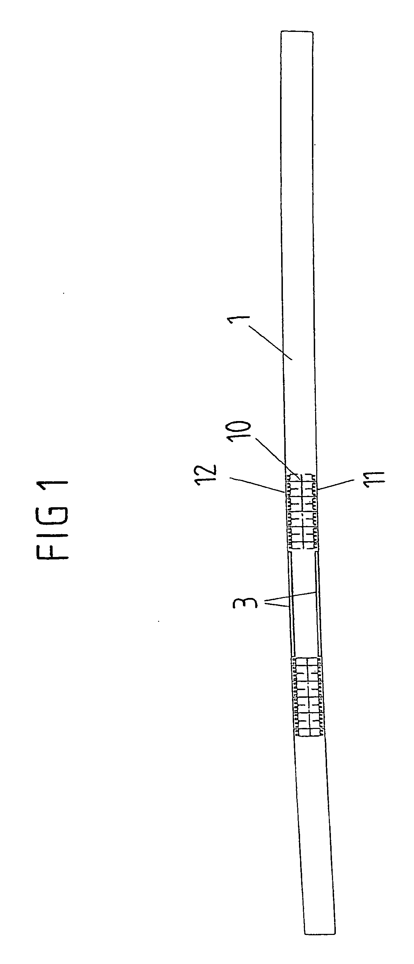

Die in Fig. 1 dargestellte schematische Draufsicht auf einen Laufbildfilm 1 zeigt in einem Teil detailliert dargestellt die zu beiden Seiten von Filmbildern 10 angeordneten Perforationslochreihen 11, 12 des Laufbildfilmes 1. Diese üblicherweise zum Filmtransport verwendeten Perforationslochreihen 11, 12 erweisen sich jedoch bei Archivfilmen wegen beschädigter oder fehlender Perforationslöcher, aufgrund von Schrumpfungsprozessen oder wegen nicht normgerechter Perforationslochformen als ungeeignet zum Filmtransport. Anstelle eines in die Perforationslochreihen eingreifenden, bzw. eintauchenden Filmtransportmittels wird ein Reibschluss zwischen einem Teil der Oberfläche entweder der Schicht- oder Trägerseite des Laufbildfilmes 1 und einem Filmtransportmittel 3, 3' hergestellt, das beispielsweise einen Zahnriemen 30, 30' enthält, dessen nicht gezahnter und insbesondere glatter Riemenrücken in reibschlüssige Anlage mit der Schicht- oder Trägerseite des Laufbildfilmes 1 gebracht wird.

Anstelle eines Zahnriemens 30, 30' kann ein beliebiges Transportband oder flexibles Zugmittel in Form eines Flachriemens, Stahlbandes oder dergleichen vorgesehen werden und den erforderlichen Reibschluss mit dem Laufbildfilm 1 herstellen. Zur Schonung des Filmmaterials kann die in Kontakt mit dem Laufbildfilm 1 tretende Seite des flexiblen Zugmittels zusätzlich geschliffen oder beschichtet und geschliffen werden. Alternativ können auch mehrere parallel geführte Riemen oder Transportbänder vorgesehen werden, deren in Kontakt mit dem Laufbildfilm 1 tretender Rücken ebenfalls geschliffen oder beschichtet und geschliffen werden kann.

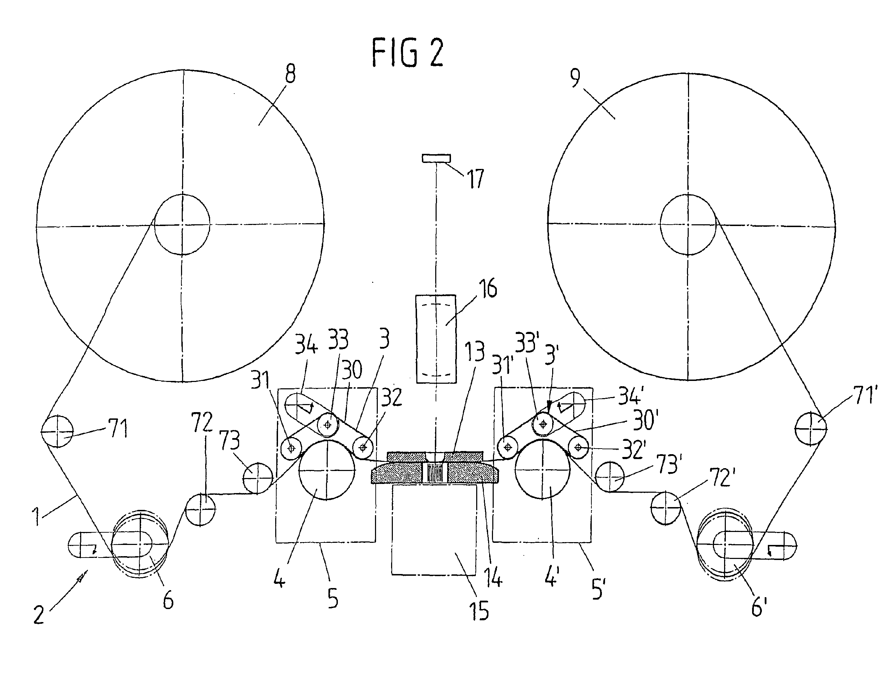

Die Herstellung des Reibschlusses zwischen dem Filmtransportmittel 3, 3' und dem Laufbildfilm 1 soll nachfolgend anhand der in Fig. 2 dargestellten Draufsicht auf eine Filmtransportvorrichtung für einen Filmscanner näher erläutert werden.

Da bei der in Fig. 2 dargestellten Filmtransportvorrichtung zu beiden Seiten eines Bildfensters 13 im Filmtransportweg dieselben Bauteile verwendet werden, sind auch dieselben Bezugszeichen für übereinstimmende Bauteile vorgesehen, wobei sich die Bauteile im Transportweg von einer Nachwickeleinrichtung 5' zu einem Aufwickelteller 9 durch ein zusätzliches Apostroph von den Bezugsziffern der Bauteile im Filmtransportweg zwischen einem Abwickelteller 8 und einer Vorwickeleinrichtung 5 befinden.

Der vor der Projektion, dem Scannen oder der Filmbearbeitung von dem Abwickelteller 8 aufgenommene Laufbildfilm 1 wird über eine erste Umlenkrolle 71 zu einer angefederten Ausgleichsrolle 6 und von dieser über zwei weitere Umlenkrollen 72, 73 zur Vorwickeleinrichtung 5 geführt. Von der Vorwickeleinrichtung 5 gelangt der Laufbildfilm 1 in einen zwischen dem Bildfenster 13 und einer Filmbühne 14 ausgebildeten Filmkanal. Der Filmbühne 14 ist eine Beleuchtungseinheit 15 zugeordnet, deren Lichtstrahlen die Filmbilder 10 des Laufbildfilmes 1 durchleuchten und mittels eines Objektivs 16 von einem Bildsensor 17 empfangen und zur Aufzeichnung auf elektronischem Wege abgetastet werden.

In Filmtransportrichtung hinter dem Bildfenster 13 und der Filmbühne 14 ist die Nachwickeleinrichtung 5' angeordnet, der zwei Umlenkrollen 72', 73', eine angefederte Ausgleichsrolle 6' sowie eine weitere Umlenkrolle 71' und der Aufwickelteller 9 zur Aufnahme des projizierten oder bearbeiteten Laufbildfilmes 1 nachgeordnet sind.

Die Vor- und Nachwickeleinrichtungen 5, 5' enthalten ein Filmtransportmittel 3, 3' mit einem als Endlosriemen ausgebildeten Zahnriemen 30, 30' sowie mit Antriebsrollen 31, 32 bzw. 31', 32' und mit einer zwischen den Antriebsrollen 31, 32; 31', 32' angeordneten, angefederten Spannrolle 33, 33'. Der Antrieb des Filmtransportmittels 3, 3' der Vor- und Nachwickeleinrichtung 5, 5' erfolgt in dem in Fig. 2 dargestellten Ausführungsbeispiel über ein Riemenvorgelege mit einem die angefederte Spannrolle 33, 33' antreibenden Antriebsriemen 34. Alternativ kann ein Direktantrieb einer der beiden Antriebsrollen 31, 32 bzw. 31', 32' oder der angefederten Spannrolle 33, 33' vorgesehen werden.

Zur Erzeugung des für einen Reibschluss zwischen dem Filmtransportmittel 3, 3' und dem Laufbildfilm 1 erforderlichen Anpressdruckes ist jeweils eine Anpressrolle 4, 4' vorgesehen, die sich zum Filmtransport an den Zahnriemen 30, 30' anlegt und dadurch eine kreisbogenförmige Umlenkung des Laufbildfilmes 1 mit einer definierten Anpresskraft des Zahnriemens 30, 30' an der Oberfläche des Laufbildfilmes 1 gewährleistet. Die Anpressrolle 4, 4' weist eine glatte oder gummierte zylindrische Oberfläche auf, die entweder an der Schichtseite oder an der Trägerseite des Laufbildfilmes 1 anliegt, während der Zahnriemen 30, 30' dementsprechend an der Trägerseite oder an der Schichtseite des Laufbildfilmes anliegt, insbesondere an deren Rändern gemäß Fig. 1.

Alternativ können auch mehrere Anpressrollen 4, 4' vorgesehen werden, die einen entsprechenden, definierten Anpressdruck zur Herstellung eines ausreichenden Reibschlusses zwischen dem Filmtransportmittel 3, 3' und dem Laufbildfilm 1 erzeugen.

Die im Filmtransportweg zwischen dem Abwickelteller 8 und der Vorwickeleinrichtung 5 bzw. zwischen der Nachwickeleinrichtung 5' und dem Aufwickelteller 9 vorgesehene, angefederte Ausgleichsrolle 6, 6' ist senkrecht zur Filmtransportbahn beweglich, was in Fig. 2 durch die strichpunktierten Linien angedeutet ist. Die angefederten Ausgleichsrollen 6, 6' bewirken einerseits einen Bewegungsaugleich zwischen dem intermittierenden Filmtransport der Vor- und Nachwickeleinrichtung 5, 5' und der kontinuierlichen Abwicklung des Laufbildfilmes 1 vom Abwickelteller 8 bzw. dem kontinuierlichen Aufwickeln des Laufbildfilmes 1 auf den Aufwickelteller 9 und andererseits die Erzeugung eines konstanten Abwickel- oder Aufwickelzuges, so dass eine im Wesentlichen konstante Zugspannung auf den Laufbildfilm 1 ausgeübt wird.

Durch die kontinuierliche Anlage des Zahnriemens 30, 30' des Filmtransportmittels 3, 3' am Laufbildfilm 1 wird beim reibschlüssigen Filmtransport ein intermittierender Kontakt zwischen dem Filmtransportmittel 3, 3' und dem Laufbildfilm 1 zur Ausführung des intermittierenden Filmtransports vermieden und damit eine schonenden Behandlung des Filmmaterials sichergestellt.

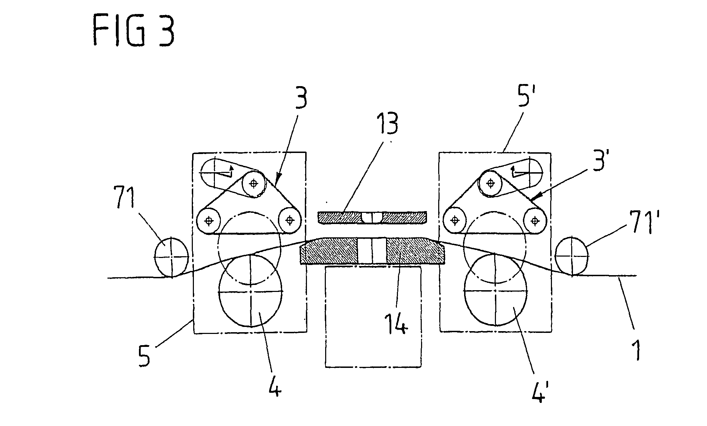

Fig. 3 zeigt einen Teil der als Filmscanner ausgebildeten Filmtransportvorrichtung 2 gemäß Fig. 2 in einer Filmeinlegeposition der Vor- und Nachwickeleinrichtung 5, 5' sowie des Bildfensters 13, in der in diesen Bereichen die Filmbahn zum Erleichtern des Einlegens des Laufbildfilmes bzw. zum Erleichtern des Herausnehmens des Laufbildfilmes 1 geöffnet sind.

Zum Öffnen der Filmbahn werden die Anpressrollen 4, 4' der Vor- und Nachwickeleinrichtung 5, 5' aus der in strichpunktierten Linien dargestellten Position während des Filmtransportes in die in ausgezogenen Linien dargestellte Filmeinlege- und Filmentnahmeposition zurückgefahren. In gleicher Weise wird das Bildfenster 13 aus der in Fig. 2 dargestellten Position während des Filmtransportes und Belichtung des Laufbildfilmes 1 in die in Fig. 3 dargestellte Position verlagert, so dass insgesamt der Laufbildfilm 1 problemlos in den Filmtransportweg eingelegt werden kann und damit ein Einfädeln des Laufbildfilmes 1 nicht erforderlich ist.

### Bezugszeichenliste

- 1: Laufbildfilm
- 2: Filmtransportvorrichtung (Scanner)
- 3, 3': Filmtransportmittel
- 4, 4': Anpressrolle
- 5: Vorwickeleinrichtung
- 5': Nachwickeleinrichtung
- 6, 6': angefederte Ausgleichsrolle
- 10: Filmbilder
- 11, 12: Perforationslochreihen
- 13: Bildfenster
- 14: Filmbühne
- 15: Beleuchtungseinheit
- 16: Objektiv
- 17: Bildsensor
- 30, 30': Zahnriemen
- 31, 32, 31', 32': Antriebsrollen
- 33, 33': Angefederte Spannrolle
- 34, 34': Antriebsriemen
- 71, 72, 73,: Umlenkrollen
- 71', 72', 73':

## Patentansprüche

1. Verfahren zum Transport eines Laufbildfilmes entlang eines Filmtransportweges, mit einer reibschlüssigen Verbindung mindestens eines Abschnitts des Laufbildfilmes (1) mit einem kontinuierlich oder intermittierend über einen Teil des Filmtransportweges bewegten Filmtransportmittel (3, 3') und einer den Laufbildfilm (1) gegen das Filmtransportmittel (3, 3') andrückenden Anpresseinrichtung (4, 4'), zwischen der und dem Filmtransportmittel (3, 3') der Laufbildfilm (1) geführt wird,
**dadurch gekennzeichnet,**
**dass** der Laufbildfilm (1) mittels jeweils ein Filmtransportmittel (3, 3') und eine Anpresseinrichtung (4, 4') enthaltenden Vor- und Nachwickeleinrichtungen (5, 5'), die zu beiden Seiten eines Bildfensters (13) angeordnet sind, transportiert wird.

2. Verfahren nach Anspruch 1, **dadurch gekennzeichnet, dass** die Anpresseinrichtung (4, 4') relativ zum Filmtransportmittel (3, 3') zwischen einer Filmeinlegeposition und einer Filmtransportposition bewegt werden kann.

3. Verfahren nach Anspruch 1 oder 2, **gekennzeichnet durch** eine fortlaufende, reibschlüssige Anlage des Filmtransportmittels (3, 3') an mindestens einer Seite des Laufbildfilmes (1).

4. Verfahren nach Anspruch 3, **dadurch gekennzeichnet, dass** das Filmtransportmittel (3, 3') zumindest teilweise an der Schichtseite oder an der Trägerseite des Laufbildfilmes (1) reibschlüssig anliegt.

5. Verfahren nach Anspruch 4, **dadurch gekennzeichnet, dass** das Filmtransportmittel (3, 3') im Bereich der Seitenränder, insbesondere im Bereich der Filmperforation(en) (11, 12) des Laufbildfilmes (1), reibschlüssig anliegt.

6. Verfahren nach mindestens einem der voranstehenden Ansprüche, **gekennzeichnet durch** eine kreisbogenförmige, reibschlüssige Anlage des Laufbildfilms (1) am Filmtransportmittel (3, 3').

7. Verfahren nach mindestens einem der voranstehenden Ansprüche, **dadurch gekennzeichnet, dass** der Laufbildfilm (1) von einem Abwickelteller (8) über mehrere erste Umlenkrollen (71, 72, 73) und eine erste, den intermittierenden Filmtransport der Vorwickeleinrichtung (5) ausgleichenden Ausgleichsrolle (6) zur Vorwickeleinrichtung (5), am Bildfenster (13) vorbei zur Nachwickeleinrichtung (5') sowie über mehrere zweite Umlenkrollen (71', 72', 73') und eine den intermittierenden Filmtransport der Nachwickeleinrichtung (5') ausgleichende zweite Ausgleichsrolle (6') zu einem Aufwickelteller (9) geführt wird.

8. Vorrichtung zum Transport eines Laufbildfilmes entlang eines Filmtransportweges mit mindestens einem im Filmtransportweg angeordneten, mit einer Antriebseinrichtung verbundenen Filmtransportmittel (3, 3'), das reibschlüssig an einem Abschnitt des Laufbildfilmes (1) anliegt und diesen kontinuierlich oder intermittierend an einem Bildfenster (13) vorbeibewegt und einer den Laufbildfilm (1) gegen das Filmtransportmittel (3, 3') andrückenden Anpresseinrichtung (4, 4'), zwischen der und dem Filmtransportmittel (3, 3') der Laufbildfilm (1) geführt ist,
**dadurch gekennzeichnet,**
**dass** das Filmtransportmittel (3, 3') und die Anpresseinrichtung (4, 4') zu einer Vorwickeleinrichtung (5) und einer Nachwickeleinrichtung (5') zusammengefasst sind, die zu beiden Seiten des Bildfensters (13) angeordnet sind.

9. Vorrichtung nach Anspruch 8, **dadurch gekennzeichnet, dass** das Filmtransportmittel (3, 3') kontinuierlich und reibschlüssig an Abschnitten des Laufbildfilmes (1) anliegt.

10. Vorrichtung nach Anspruch 8 oder 9, **dadurch gekennzeichnet, dass** das Filmtransportmittel (3, 3') mit einer Anpressrolle (4, 4') zusammenwirkt, zwischen der und dem Filmtransportmittel (3, 3') der Laufbildfilm (1) kreisbogenförmig geführt ist und reibschlüssig am Filmtransportmittel (3, 3') anliegt.

11. Vorrichtung nach einem der voranstehenden Ansprüche 8 bis 10, **dadurch gekennzeichnet, dass** das Filmtransportmittel (3, 3') ein bandförmiges Element (30, 30') enthält.

12. Vorrichtung nach einem der voranstehenden Ansprüche 8 bis 11, **dadurch gekennzeichnet, dass** das Filmtransportmittel (3, 3') ein flexibles Zugmittel (30, 30') enthält.

13. Vorrichtung nach mindestens einem der voranstehenden Ansprüche 8 bis 12, **dadurch gekennzeichnet, dass** das Filmtransportmittel (3, 3') mindestens einen Endlosriemen, insbesondere einen Endlos-Zahnriemen (30, 30') oder einen Endlos-Flachriemen, oder mindestens ein Transportband, insbesondere ein profiliertes Transportband, enthält.

14. Vorrichtung nach Anspruch 13, **dadurch gekennzeichnet, dass** die reibschlüssig am Laufbildfilm (1) anliegende Seite des Endlosriemens (30, 30') oder Transportbandes geschliffen ist.

15. Vorrichtung nach Anspruch 13, **dadurch gekennzeichnet, dass** die reibschlüssige, am Laufbildfilm (1) anliegende Seite des Endlosriemens (30, 30') oder Transportbandes beschichtet und geschliffen ist.

16. Vorrichtung nach mindestens einem der voranstehenden Ansprüche 8 bis 15, **dadurch gekennzeichnet, dass** die Anpressrolle (4, 4') eine glatte, am Laufbildfilm (1) anliegende Zylinderfläche aufweist.

17. Vorrichtung nach mindestens einem der voranstehenden Ansprüche 8 bis 16, **dadurch gekennzeichnet, dass** die Anpressrolle (4, 4') eine gummierte, am Laufbildfilm (1) anliegende Zylinderfläche aufweist.

18. Vorrichtung nach mindestens einem der voranstehenden Ansprüche 8 bis 17, **dadurch gekennzeichnet, dass** die Anpressrolle (4, 4') vorzugsweise senkrecht zum Filmtransportweg von einer den Laufbildfilm (1) in reibschlüssige Anlage an das Filmtransportmittel (3, 3') bringenden Filmtransportposition in eine zum Filmtransportmittel (3, 3') beabstandete Einlegeposition beweglich ist.

19. Vorrichtung nach mindestens einem der voranstehenden Ansprüche 13 bis 18, **dadurch gekennzeichnet, dass** der Endlosriemen (30, 30') oder das Transportband um mindestens zwei zueinander beabstandete Antriebsrollen (31, 32; 31', 32') gelegt ist.

20. Vorrichtung nach Anspruch 19, **dadurch gekennzeichnet, dass** der Endlosriemen (30, 30') oder das Transportband um zwei zueinander beabstandete Antriebsrollen (31, 32; 31', 32') und eine zwischen den Antriebsrollen (31, 32; 31', 32') angeordnete Spannrolle (33, 33') gelegt ist.

21. Vorrichtung nach Anspruch 20, **dadurch gekennzeichnet, dass** die Spannrolle (33, 33') angefedert ist.

22. Vorrichtung nach einem der voranstehenden Ansprüche 19 bis 21, **dadurch gekennzeichnet, dass** mindestens eine Antriebsrolle (31, 32; 31', 32') und/oder die Spannrolle (33, 33') mit der Antriebseinrichtung direkt oder über ein Riemenvorgelege (34, 34') verbunden ist/sind.

23. Vorrichtung nach einem der voranstehenden Ansprüche 8 bis 22, **dadurch gekennzeichnet, dass** im Filmtransportweg des Laufbildfilmes (1) zwischen der Vorwickelund der Nachwickeleinrichtung (5, 5') und den Laufbildfilm (1) aufnehmenden Aufwickel- und Abwickeltellern (8, 9) mindestens eine Umlenkrolle (71, 72, 73; 71', 72', 73') und eine die Filmtransportbewegung der Vor- und Nachwickeleinrichtung (5, 5') ausgleichende Ausgleichsrolle (6, 6') angeordnet sind.

24. Vorrichtung nach Anspruch 23, **dadurch gekennzeichnet, dass** die Ausgleichsrolle (6, 6') angefedert ist.

## Claims

1. Method for the transport of a movie film along a film transport path,
with a friction-locking connection of at least one section of the movie film (1) to a film transport means (3, 3') being moved continuously or intermittently over a part of the film transport path and a pressing device (4, 4') which presses the movie film (1) against the film transport means (3, 3'), wherein the movie film (1) is routed between the film transport means (3, 3') and a pressing device (4, 4')
**characterized in that**
the movie film (1) is transported by means of feed and take-up devices (5, 5'), which each contain a film transport means (3, 3') and a pressing device (4, 4') and are arranged on both sides of a picture window (13).

2. Method as claimed in claim 1, **characterized in that** the pressing device (4, 4') can be moved relative to the film transport means (3, 3') between a film insertion position and a film transport position.

3. Method as claimed in claim 1 or 2, **characterized by** a continuous, friction-locking contact between the film transport means (3, 3') and at least one face of the movie film (1).

4. Method as claimed in claim 3, **characterized in that** the film transport means (3, 3') rests with a friction lock at least partially on the layer face or on the mount face of the movie film (1).

5. Method as claimed in claim 4, **characterized in that** the film transport means (3, 3') rests with a friction lock in the area of the side edges, in particular in the area of the film perforation or perforations (11, 12) of the movie film (1).

6. Method as claimed in at least one of the preceding claims, **characterized by** a friction-locking contact, in the form of a circular arc, between the movie film (1) and the film transport means (3, 3').

7. Method as claimed in at least one of the preceding claims, **characterized in that** the movie film (1) is routed from a feed plate (8) via a plurality of first deflection rollers (71, 72, 73) and a first compensation roller (6), which compensates for the intermittent film transport of the feed device (5) to the feed device (5), past the picture window (13) to the take-up device (5') as well as via a plurality of second deflection rollers (71', 72', 73') and a second compensation roller (6') which compensates for the intermittent film transport of the take-up device (5'), to a take-up plate (9).

8. Apparatus for the transport of a movie film along a film transport path, with at least one film transport means (3, 3'), which is arranged in the film transport path, is connected to a drive device, rests with a friction lock on one section of the movie film (1), and moves this continuously or intermittently past a picture window (13) and a pressing device (4, 4') which presses the movie film (1) against the film transport means (3, 3'), wherein the movie film (1) is routed between the film transport means (3, 3') and a pressing device (4, 4'),
**characterized in that**
the film transport means (3, 3') and the pressing device (4, 4') are combined to form a feed device (5) and take-up device (5'), which are arranged on both sides of a picture window (13).

9. Apparatus as claimed in claim 8, **characterized in that** the film transport means (3, 3') rests continuously and with a friction lock on sections of the movie film (1).

10. Apparatus as claimed in claim 8 or 9, **characterized in that** the film transport means (3, 3') interacts with a pressing roller (4, 4'), between which and the film transport means (3, 3') the movie film (1) is routed in the form of a circular arc and rests with a friction lock on the film transport means (3, 3').

11. Apparatus as claimed in one of the preceding claims 8 to 10, **characterized in that** the film transport means (3, 3') contains an element (30, 30') in the form of a strip.

12. Apparatus as claimed in one of the preceding claims 8 to 11, **characterized in that** the film transport means (3, 3') contains a flexible pulling means (30, 30').

13. Apparatus as claimed in at least one of the preceding claims 8 to 12, **characterized in that** the film transport means (3, 3') contains at least one endless belt, in particular an endless toothed belt (30, 30') or an endless flat belt, or at least one transport belt, in particular a profiled transport belt.

14. Apparatus as claimed in claim 13, **characterized in that that** side of the endless belt (30, 30') or transport belt which rests with a friction lock on the movie film (1) is ground.

15. Apparatus as claimed in claim 13, **characterized in that** the friction-locking side of the endless belt (30, 30') or transport belt which rests on the movie film (1) is coated and ground.

16. Apparatus as claimed in at least one of the preceding claims 8 to 15, **characterized in that** the pressing roller (4, 4') has a smooth cylindrical surface which rests on the movie film (1).

17. Apparatus as claimed in at least one of the preceding claims 8 to 16, **characterized in that** the pressing roller (4, 4') has a rubber-coated cylindrical surface which rests on the movie film (1).

18. Apparatus as claimed in at least one of the preceding claims 8 to 17, **characterized in that** the pressing roller (4, 4') can preferably move perpendicularly to the film transport path from a film transport position, which brings the movie film (1) into friction-locking contact with the film transport means (3, 3'), to an insertion position, which is at a distance from the film transport means (3, 3').

19. Apparatus as claimed in at least one of the preceding claims 13 to 18, **characterized in that** the endless belt (30, 30') or the transport belt is placed around at least two drive rollers (31, 32; 31', 32'), which are separated from one another.

20. Apparatus as claimed in claim 19, **characterized in that** the endless belt (30, 30') or the transport belt is placed around two drive rollers, (31, 32; 31', 32'), which are separated from one another, and a tensioning roller (33, 33'), which is arranged between the drive rollers (31, 32; 31', 32').

21. Apparatus as claimed in claim 20, **characterized in that** the tensioning roller (33, 33') is sprung.

22. Apparatus as claimed in one of the preceding claims 19 to 21, **characterized in that** at least one drive roller (31, 32; 31', 32') and/or the tensioning roller (33, 33') are/is connected to the drive device directly or via a belt intermediate gear (34, 34').

23. Apparatus as claimed in one of the preceding claims 8 to 22, **characterized in that** at least one deflection roller (71, 72, 73; 71', 72', 73') and a compensation roller (6, 6'), which compensates for the film transport movement of the feed and take-up device (5, 5'), are arranged in the film transport path of the movie film (1)between the feed and take-up device (5, 5') and feed and take-up plates (8, 9), which hold the movie film (1).

24. Apparatus as claimed in claim 23, **characterized in that** the compensation roller (6, 6') is sprung.

## Revendications

1. Procédé de transport d'un film cinématographique le long d'un itinéraire d'entraînement de film, avec un assemblage par frottement d'au moins une section du film cinématographique (1) avec un moyen d'entraînement de film (3, 3') déplacé de manière continue ou intermittente sur une partie de l'itinéraire d'entraînement de film, et un dispositif de pression (4, 4') appuyant le film cinématographique (1) contre le moyen d'entraînement de film (3, 3'), le film cinématographique (1) étant amené entre ledit dispositif de pression (4, 4') et le moyen d'entraînement de film (3, 3'),
**caractérisé en ce que**,
le film cinématographique (1) est transporté à l'aide de dispositifs débiteurs supérieur et inférieur (5, 5') contenant respectivement un moyen d'entraînement de film (3, 3') et un dispositif de pression (4, 4') agencés des deux côtés d'une fenêtre de projection (13).

2. Procédé selon la revendication 1, **caractérisé en ce que** le dispositif de pression (4, 4') peut être déplacé par rapport au moyen d'entraînement de film (3, 3') entre une position d'insertion du film et une position d'entraînement du film.

3. Procédé selon la revendication 1 ou 2, **caractérisé par** une application continue avec frottement du moyen d'entraînement de film (3, 3') contre au moins un côté du film cinématographique (1).

4. Procédé selon la revendication 3, **caractérisé en ce que** le moyen d'entraînement de film (3, 3') est appliqué avec frottement au moins partiellement contre le côté émulsion ou contre le côté support du film cinématographique (1).

5. Procédé selon la revendication 4, **caractérisé en ce que** le moyen d'entraînement de film (3, 3') est appliqué avec frottement dans la zone des marges, en particulier dans la zone de la / des perforation(s) du film (11, 12) du film cinématographique (1).

6. Procédé selon au moins l'une des revendications précédentes, **caractérisé par** une application en arc de cercle avec frottement du film cinématographique (1) contre le moyen d'entraînement de film (3, 3').

7. Procédé selon au moins l'une des revendications précédentes, **caractérisé en ce que** le film cinématographique (1) est amené depuis un plateau débiteur (8) via plusieurs premiers rouleaux de renvoi (71, 72, 73) et un premier rouleau de compensation (6) compensant l'entraînement intermittent du film du dispositif débiteur supérieur (5) jusqu'au dispositif débiteur supérieur (5), en passant devant la fenêtre de projection (13), jusqu'au dispositif débiteur inférieur (5'), ainsi que via plusieurs seconds rouleaux de renvoi (71', 72', 73') et un second rouleau de compensation (6') compensant l'entraînement intermittent du film du dispositif débiteur inférieur (5') jusqu'à un plateau d'enroulement (9).

8. Dispositif de transport d'un film cinématographique le long d'un itinéraire d'entraînement de film avec au moins un moyen d'entraînement de film (3, 3') agencé dans l'itinéraire d'entraînement de film et relié à un dispositif d'entraînement, lequel moyen d'entraînement de film est appliqué avec frottement contre une section du film cinématographique (1) et déplace celle-ci de manière continue ou intermittente en passant devant une fenêtre de projection (13), et un dispositif de pression (4, 4') appuyant le film cinématographique (1) contre le moyen d'entraînement de film (3, 3'), le film cinématographique (1) étant amené entre ledit dispositif de pression (4, 4') et le moyen d'entraînement de film (3, 3'),
**caractérisé en ce que**,
le moyen d'entraînement de film (3, 3') et le dispositif de pression (4, 4') sont réunis à un dispositif débiteur supérieur (5) et à un dispositif débiteur inférieur (5') agencés des deux côtés de la fenêtre de projection (13).

9. Dispositif selon la revendication 8, **caractérisé en ce que** le moyen d'entraînement de film (3, 3') est appliqué de manière continue et avec frottement contre des sections du film cinématographique (1).

10. Dispositif selon la revendication 8 ou 9, **caractérisé en ce que** le moyen d'entraînement de film (3, 3') concourt avec un rouleau de pression (4, 4'), le film cinématographique (1) étant amené en arc de cercle entre ledit rouleau de pression (4, 4') et le moyen d'entraînement de film (3, 3') et appliqué avec frottement contre le moyen d'entraînement de film (3,3').

11. Dispositif selon l'une des revendications précédentes 8 à 10, **caractérisé en ce que** le moyen d'entraînement de film (3, 3') contient un élément en forme de bande (30, 30').

12. Dispositif selon l'une des revendications précédentes 8 à 11, **caractérisé en ce que** le moyen d'entraînement de film (3, 3') contient un moyen de traction flexible (30, 30').

13. Dispositif selon au moins l'une des revendications précédentes 8 à 12, **caractérisé en ce que** le moyen d'entraînement de film (3, 3') contient au moins une courroie sans fin, en particulier une courroie dentée sans fin (30, 30') ou une courroie plate sans fin ou au moins une courroie de transport, en particulier une courroie de transport profilée.

14. Dispositif selon la revendication 13, **caractérisé en ce que** le côté appliqué avec frottement contre le film cinématographique (1) de la courroie sans fin (30, 30') ou de la courroie de transport est poli.

15. Dispositif selon la revendication 13, **caractérisé en ce que** le côté appliqué avec frottement contre le film cinématographique (1) de la courroie sans fin (30, 30') ou de la courroie de transport est enduit et poli.

16. Dispositif selon au moins l'une des revendications précédentes 8 à 15, **caractérisé en ce que** le rouleau de pression (4, 4') présente une surface cylindrique lisse appliquée contre le film cinématographique (1).

17. Dispositif selon au moins l'une des revendications précédentes 8 à 16, **caractérisé en ce que** le rouleau de pression (4, 4') présente une surface cylindrique gommée appliquée contre le film cinématographique (1).

18. Dispositif selon au moins l'une des revendications précédentes 8 à 17, **caractérisé en ce que** le rouleau de pression (4, 4') est mobile de préférence perpendiculairement à l'itinéraire d'entraînement de film depuis une position d'entraînement du film amenant le film cinématographique (1) appliqué avec frottement contre le moyen d'entraînement de film (3, 3'), à une position d'insertion espacée du moyen d'entraînement de film (3, 3').

19. Dispositif selon au moins l'une des revendications précédentes 13 à 18, **caractérisé en ce que** la courroie sans fin (30, 30') ou la courroie de transport est placée autour d'au moins deux rouleaux d'entraînement (31, 32 ; 31', 32') espacés l'un de l'autre.

20. Dispositif selon la revendication 19, **caractérisé en ce que** la courroie sans fin (30, 30') ou la courroie de transport est placée autour de deux rouleaux d'entraînement (31, 32; 31', 32') espacés l'un de l'autre et d'un tendeur de courroie (33, 33') agencé entre les rouleaux d'entraînement (31, 32 ; 31', 32').

21. Dispositif selon la revendication 20, **caractérisé en ce que** le tendeur de courroie (33, 33') est à ressort.

22. Dispositif selon l'une des revendications précédentes 19 à 21, **caractérisé en ce qu'**au moins un rouleau d'entraînement (31, 32 ; 31', 32') et/ou le tendeur de courroie (33, 33') est / sont relié(s) au dispositif d'entraînement, directement ou par l'intermédiaire d'un renvoi à courroie (34, 34').

23. Dispositif selon l'une des revendications précédentes 8 à 22, **caractérisé en ce que**, sur l'itinéraire d'entraînement du film cinématographique (1) entre le dispositif débiteur supérieur et le dispositif débiteur inférieur (5, 5') et les plateaux enrouleur et débiteur (8, 9) recevant le film cinématographique (1), sont agencés au moins un rouleau de renvoi (71, 72, 73; 71', 72', 73') et un rouleau de compensation (6, 6') compensant le déplacement d'entraînement du film du dispositif débiteur supérieur et inférieur (5, 5').

24. Dispositif selon la revendication 23, **caractérisé en ce que** le rouleau de compensation (6, 6') est à ressort.
